# EUROPEAN PATENT APPLICATION

(11) **EP 2 602 993 A1**
(43) Date of publication of application: **12.06.2013**
(21) Application number: 11192685.3
(22) Date of filing: 08.12.2011
(51) Int. Cl.: H04N 7/14

(54) **Apparatus and associated method for face tracking in video conference and video chat communications**

(71) Applicant: Research In Motion Limited, Waterloo, ON N2L 3W8 (CA); Research in Motion TAT AB, 21140 Malmö (SE)
(72) Inventor: Gardenfors, Dan Zacharias, 211 40 Malmo (SE); Eriksson, Marcus, 211 40 Malmo (SE)
(74) Representative: Bryn-Jacobsen, Caelia

(57) **Abstract**

A communication device useful for video chat applications employs face recognition and tracking functionality to display an indication of the near-end user being properly positioned within an image capture area of the communication device without displaying the near-end user's image.

## Description

The present disclosure relates generally to communication devices and more particularly the present disclosure relates to an apparatus, and an associated method that employs face tracking functionality to display an indication of the near-end user being properly positioned within an image capture area of the communication device without displaying the near-end user's image.

### Background

Cellular telephones and similar devices for communication have become ubiquitous in society. These devices have become capable of enhanced communication as well as other features that are important to the users. In order to enable these features, the devices include microprocessors, memory, and related computational components, and a camera functionality to perform imaging tasks that are primary or secondary for the device. For example, inclusion of a camera capable of capturing still and video images enables the device to take and store still pictures and/or video information.

Video conferencing is one communication feature that originated for fixed equipment installations and has been adopted as a video chat capability for personal computers. Typical operation of a video chat connection is the display of the far-end user's image on a near-end display or screen. The far-end user is the person using video communication equipment apart from where the local, near-end user is located.

When a user uses a camera-equipped communication device to talk to another person in a video chat, the display of the communication device used for the chat regularly displays two windows: one showing live video images of the far-end user, another window shows the live video images that are being transmitted, i.e. the face of the near-end user of the device. This multiple image display is useful since it allows the near-end user to see if he/she is positioned correctly to be visible to the far-end user. The multiple image display, however, has several disadvantages. First, users get distracted and become self-conscious by looking at themselves. One is not accustomed to having the equivalent of a mirror placed beside the face of a person to whom one is talking. It is distracting and it decreases user immersion. Second, it is not an efficient use of the display screen. Not only does the effective size of the screen appear diminished for the user, the display of two simultaneous live video feeds places increased demand for information throughput on the communication system. Third, the picture-in-picture format does not work well when the display is switched between portrait and landscape orientation for the video chat as the device is moved from one position to another. Switching orientation during a video chat results in annoying and delayed rearrangements of windows during what the user desires to be a real-time display of the far-end user.

Additionally, portable devices cannot always determine an up direction and a down direction for the portable device camera. Typically, motion sensors and accelerometers have been employed to determine the orientation of a device and thus the camera. When the device is positioned horizontally, e.g., placed flat on a table, the up/down orientation becomes unresolvable by the sensors. This means that users' faces might appear upside down when video chatting to another person.

### Brief Description of the Drawings

Fig. 1 is a block diagram of a communication device which may employ aspects of the present disclosure.

Fig. 2 is a front face diagram of a wireless device which may employ aspects of the present disclosure.

Fig. 3 is a block diagram of an image capture subsystem which may be employed in the communication device of Fig. 1.

Fig. 4 is a representation of a display of the wireless device of Fig. 2 in which a window contains an image of the far-end user and in which a miniature window containing an image of the near-end user is displayed.

Fig. 5 is a representation of a display of the wireless device of Fig. 2 in which an image of the near-end user is displayed with a face recognition indicium surrounding the face of the near-end user.

Fig. 6 is a representation of a display of the wireless device of Fig. 2 in which an image of the far-end user is displayed along with an indication that the near-end user's face may be properly located.

Fig. 7 is a representation of a display of the wireless device of Fig. 2 in which an image of the far-end user is displayed along with an indicator that the near-end user's face may or may not be properly located and in which directional information is provided to aid the near-end user in properly locating his/her face.

Figs. 8A, 8B, and 8C are representations of alternative displays of the wireless device of Fig. 2 in which indicator information is presented in one portion of the display to aid proper positioning of the near-end user's face.

Fig. 9 is a flow diagram of the process of providing non-distracting indication of near-end user face positioning.

### Detailed Description

The present disclosure advantageously provides an apparatus, and an associated method, by which to inform the user that he/she is visible to the other person and in the correct orientation, without displaying the user's face on the apparatus display. Aspects of the present disclosure include the incorporation of face tracking functionality during a video chat communication. The number of video feed windows is reduced to one, thereby simplifying both the perception of the far-end user's image and the information throughput of the communication system.

In order that a near-end user be able to position himself/herself in a location within the image capture area of a camera-equipped communication device, one aspect of the present disclosure includes an image capture device positioned to capture visible information present in an image capture area. An image from a far-end user is displayed on a first portion of a display and an indication of the position of the face of the near-end user being located within the image capture area is displayed in a second portion of the display.

Another aspect of the present disclosure includes capturing an image of the face of the near-end user and deriving a positional indicium of the near-end user's face from the facial features of the near-end user. The location of the indicium is compared to boundaries of a predetermined area within the image capture area and an indicator is generated in a portion of the display of the near-end user's communication device. This indicator, which has characteristics related to the positional indicium, informs the near-end user whether his/her face is properly positioned within the captured image by modifying the displayed far-end image.

Another aspect of the present disclosure includes capturing an image of the face of the near-end user and deriving an indicium of the near-end user's face from the facial features of the near-end user. The location of the indicium is compared to boundaries of a predetermined area within the image capture area and if a boundary has been breached and a directive symbol indicative of the breached boundary is generated to aid the near-end user in attaining a proper position.

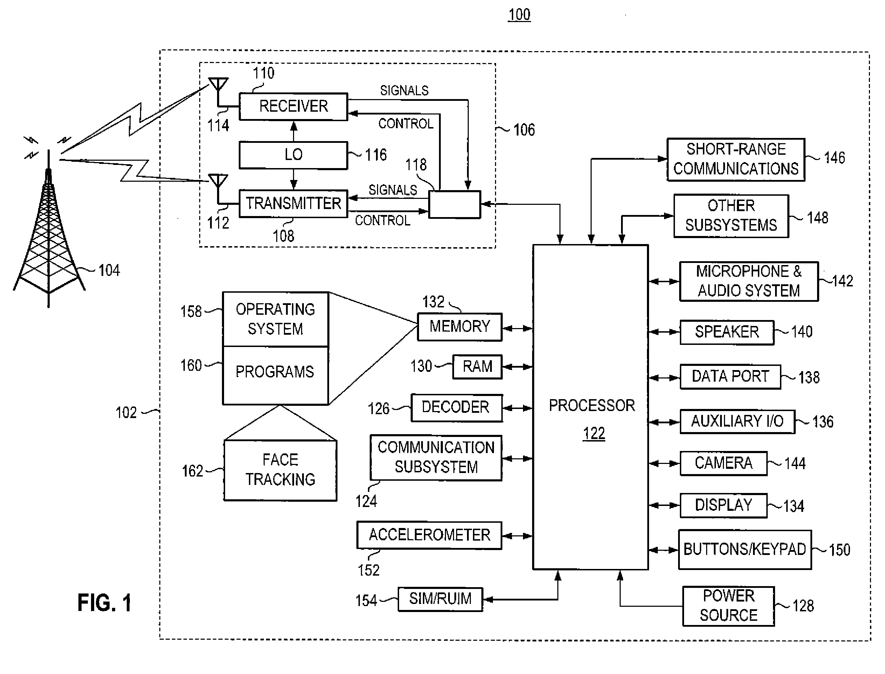

Referring now to Figure 1, an exemplary communication system 100 provides for communications between a fixed network 104 and a wireless device 102, which may employ aspects of the present disclosure. In the diagram of Figure 1, the communication system 100 forms a radio communication system, however, aspects of the present disclosure may be employed in embodiments that do not depend upon radio for interconnection. Two-way radio channels are defined upon a radio air interface extending between a fixed network part 104 of the communication system and the wireless device 102.

Examples of communication systems enabled for two-way communication include, but are not limited to, a General Packet Radio Service (GPRS) network, a Universal Mobile Telecommunication Service (UMTS) network, an Enhanced Data for Global Evolution (EDGE) network, a Code Division Multiple Access (CDMA) network, High-Speed Packet Access (HSPA) networks, Universal Mobile Telecommunication Service Time Division Duplexing (UMTS-TDD) networks, Ultra Mobile Broadband (UMB) networks, Worldwide Interoperability for Microwave Access (WiMAX) networks, Long Term Evolution (LTE) networks, wireless LANs (such as in accordance with Institute of Electrical and Electronics Engineers Standard 802.11), and other systems using other suitable protocols or standards that can be used for carrying voice, data and/or video. For the systems listed above, the wireless device 102 can require a unique identifier to enable the wireless device 102 to transmit and receive messages from the fixed network 104. Other systems may not require such identifying information. GPRS, UMTS, and EDGE use a Subscriber Identity Module (SIM) in order to allow communication with the fixed network 104. Likewise, most CDMA systems use a Removable User Identity Module (RUIM) in order to communicate with the CDMA network. The RUIM and SIM card can be used in multiple different wireless devices 102.

In the exemplary implementation in which the communication system forms a radio communication system, the wireless device 102 includes radio transceiver circuitry 106, which includes a transmitter 108, a receiver 110, one or more antennas 112, 114, which may be coupled to the transmitter individually, as illustrated, or one antenna coupled to both the transmitter and the receiver or coupled in various diversity arrangements, local oscillator 116, and a signal processor 118, which couples and processes signals between the transmitter, receiver, and a system processor 122. The system processor 122 and associated components, in one embodiment, are disposed as part of the wireless device 102.

The system processor 102 controls overall operation of the wireless device. In various embodiments, functions provided by a wireless device include voice, data, and command communications, which are implemented by a communication subsystem 124. The communication subsystem 124 is used, for example, to initiate and to support an active voice or video call or a data communication session. The communication subsystem 124 is comprised of any of various combinations of hardware, software, and firmware to perform various designated functions. The software is functionally or conceptually divided into software modules. Software in one module is able to share or to call upon functions of another module.

Data received by a device at which the electronic assembly is implemented is processed, including decompression and decrypting operations, by a decoder 126. The communication subsystem 124, simply stated, receives messages from, and sends messages to, the fixed network 104. The communication subsystem 124 facilitates initiation and operation of an active call when the wireless device 102 is in a real-time, communication session. The fixed network 104 is of any various types of networks, such as those listed above, that supports voice, video, and data communications.

A power source 128 provides operative power to operate or to charge the electronic assembly and is implemented with one or more rechargeable batteries or a port to an external power supply.

The system processor 122 interacts with additional components, here including a random access memory (RAM) 130, a memory 132, a display device 134, an auxiliary input/output (I/O) subsystem 136, a data port 138, a speaker 140, a microphone 142, an image capture subsystem, a camera, 144, a short-range communication subsystem 146, and other subsystems 148. A user of the wireless device 102 is able to enter data and to operate functions of the device with a data input device coupled to the system processor 122. The data input device includes buttons and/or a keypad 150 or a graphical user interface produced at the display device 134, in which touches and gestures are detected by a touch-sensitive overlay of the display device 134. The processor 122 interacts with the buttons or keypad or with the touch-sensitive overlay of the display device 134 by way of an electronic controller, which is represented in one embodiment by the other subsystems block 148. As part of the user interface, information, such as text, characters, symbols, images, icons, and other items that are rendered are displayable at the display 134. The processor 122 further interacts with an accelerometer 152 that detects a direction of gravitation forces and/or user-input acceleration forces in association with the decoder 126. In various embodiments, the buttons and keypad 150 are used to operate select functions of the electronic assembly.

The wireless device 102 further includes a subscriber identity module or removable user identity module (SIM/RUIM) card 154. The SIM/RUIM card features memory and holds key configurations and other information such as identification and subscriber-related information. With a properly enabled wireless device 102, two-way communication between the wireless device 102 and the fixed network 104 is possible. It is also understood that the wireless device 102 can be configured to communicate in asynchronous networks, such as when two or more wireless devices communicate without the assistance of fixed network equipment. In an alternate implementation, identification information is programmed elsewhere, such as at the memory 132.

The wireless device 102 further includes an operating system 158 and software programs 160 formed of program code that define algorithms. The operating system 158 and the programs 160 are executed by the system processor 122 during operation of the wireless device. The operating system 158 and the software programs 160 are stored, for example, at a persistent, updatable store, such as the memory 132, as illustrated. Additional applications or programs can be loaded by way of the fixed network 104, the auxiliary I/O subsystem 136, the data port 138, the short-range communication subsystem 146, or any of the other subsystems 148 that is suitable for transferring program files. The software programs 160 include software modules, one of which is a face tracking program 162.

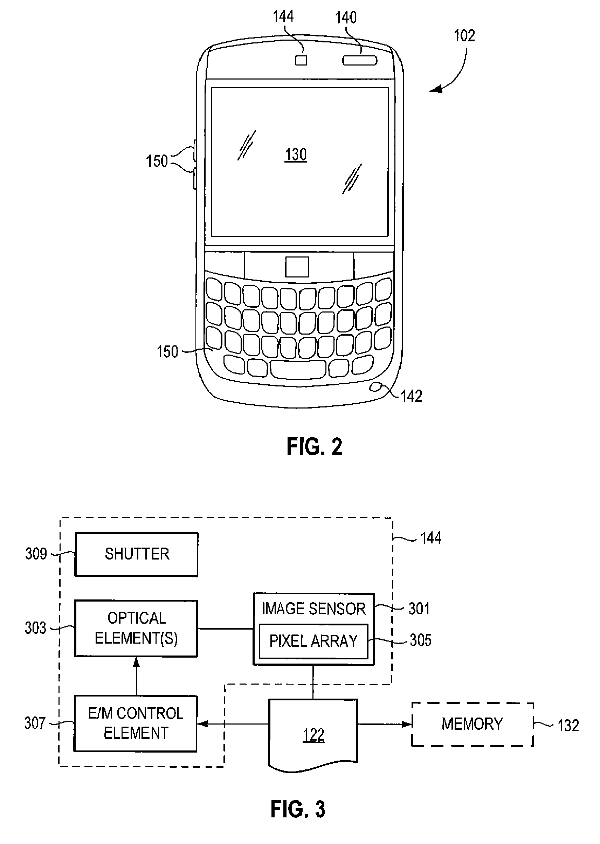

The front face of a wireless device 102 that may employ aspects of the present disclosure is illustrated in Fig. 2, but other devices such as a personal digital assistant (PDA), a handheld gaming device, a handheld media player, an electronic mail client, an instant messaging client, a netbook computer, a notebook computer, a laptop computer, a desktop computer and the like may also advantageously utilize aspects of the present disclosure. Wireless device 102, in one embodiment, is a single device enclosed in one enclosure. Wireless device 102, however, may represent a "system", in which different components are connected together to form the system. As an example, a desktop computer may be such a system, having a flat panel display provided by one vendor and a camera provided by another vendor.

One may perceive the user interface functions of the wireless device 102 from Fig. 2, which were described in association with Fig. 1. Readily visible in Fig. 2 are the buttons and keypad 150, the display 130, the microphone 142, the speaker 140, and an aperture in the wireless device forming a portion of the image capture subsystem 144, which captures images from objects to the front of the wireless device. A back of the wireless device 102 (not shown) includes another instance of the image capture subsystem. It can be appreciated that the image capture subsystem 144 is further disposed on the back of the wireless device may be operated like a camera by the user, such that the image captured by the back portion of the image capture subsystem can be displayed on display 130 during the image-capturing event. The front portion of the image capture subsystem 144 is used by the user to capture a representation of the user's face for self-portraiting and for communication instances such as video conferencing or video chats. The user of the wireless device would describe the image capture subsystems as cameras.

The elements that comprise the image capture subsystem 144 are shown in the block diagram of Fig. 3. Some of the elements depicted may be shared between the front face and the back portions, as practical. An image sensor 301 is optically coupled to an arrangement 303 of one or more optical elements. Image sensor 301 comprises a pixel array 305 comprising photosensitive material. Image sensor 301 is arranged to read a captured image from pixel array 305. The actual size of the image read from pixel array 305 will depend on the number of pixels in pixel array 305 and the sensor mode in which image sensor 301 is operated. Examples of the image sensor 301, which may be employed in aspects of the present disclosure, include a charge coupled device (CCD) image sensor and a complementary metal oxide semiconductor (CMOS) image sensor. The image capture subsystem 144 may, optionally, include an electromechanical element 307, such as a motor or an actuator, mechanically coupled to optical elements of arrangement 303 and a shutter 309. Electromechanical element 307 may be controllable by system processor 122 to adjust positions of optical elements of arrangement 303, to effect focusing and other characteristics of arrangement 303, and to activate shutter 309. In some embodiments, and depending upon the requirements of the image sensor 301, the shutter may be implemented in electronic or electro-optical form.

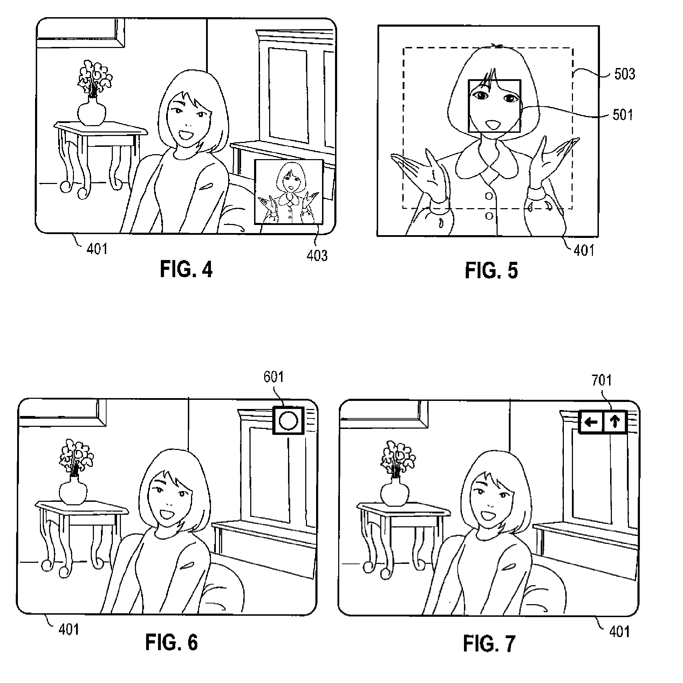

When the user desires to operate the wireless device 102 in a video chat or video conference mode, the user initiates a call with another party via the network. The call process is generally specified by the operator of the fixed network or the video service provider. Once the video chat is established, the far-end party's image is typically displayed in a window on display 130. The near-end user's image is captured by the camera, image capture subsystem 144, and is conventionally displayed in a miniature window within the window display of the far-end user's image. Fig. 4 is an illustration of such a picture-in-picture display window 401, wherein the miniature window 403 is shown in the lower right corner of the displayed far-end user's image.

As explained previously, the multiple window display can cause the user to become distracted by his/her own live image. Also, the displacement of part of the far-end user's image by the near-end image reduces the amount of screen area available for displaying the far-end user's image and can be perceived as an inefficient use of the display screen, particularly in small portable devices. With respect to the communication system, the dual live video feeds places a throughput burden on the system, and the picture-in-picture format does not work well when the portable device is rotated.

An embodiment of the present disclosure utilizes face tracking technology to track the near-end user's face position in relation to the area of image capture of the image capture subsystem provided in the wireless device. The near-end user can be informed by the wireless device that his/her face is visible to the far-end user without the picture-in-picture display. Included in the memory 132 is an application program 162 that analyzes facial features common to humans, and identifies from the features when a face is present within the area of image capture of the image capture subsystem. One such face tracking application program is OpenCV (Intel^{Ⓡ} Open Source Computer Vision Library - www. sourceforge.net/projects/opencvlibrary) with Harr cascade classifier. Another face tracking application program is available from Omron Corporation. An output from the face tracking application program is an indicium of the location of the near-end user's face that is generated by an indicium generator of the application program. This indicium can be a box, another geometric figure, or data points representing facial features, which indicium represents an image location of facial characteristics common to humans. Consider Fig. 5 in which the near-end user's image is located. An indicium, a box 501, surrounds the near-end user's face. The indicium is shown positionally located within the image capture area. A predetermined area 503, the central portion of the image capture area of the image capture subsystem, is established for the display in an embodiment and is a frame in which it is desirable for the near-end user's face to appear, since the near-end user most likely desires his/her image to be presented to the far-end user. In one embodiment, the frame encloses an area that is about 56% of the total area of the display screen window 401. The borders of the frame can, in other embodiments, be selected to be closer to the edges of the window 401 and can be closer to the top and bottom, or closer to the left/right side, or both, of the window ― even the point of being coincident with the edges of the window itself.

In an embodiment of the present disclosure, the face tracking process includes a comparator that compares the positional indicium to the position of the borders of the frame established within the image capture area. Once the indicium breaches a border of the frame of the desirable area, an indication of the breach is presented to the near-end user. Rather than displaying the near-end user's image, a simple indicator is presented in the display of the far-end user's image. An indicator in one embodiment is shown in Fig. 6. A color dot 601 is inserted into the window 401. As long as the near-end user's face indicium is determined to be within the predetermined frame 503, the color dot 601 is displayed as a distinguishing color, for example green. When the near-end user's face indicium breaches one of the borders of the frame, or if no face is detected, the color dot 601 is displayed as a different color, for example red. The near-end user can easily self-correct his/her face location without a distracting self-image display.

As an alternative, the inserted indicator provides additional corrective information for the near-end user. As shown in Fig. 7, an indicator 701 comprises one or more directive symbols such as one or more arrows, which display a direction the near-end user needs to move to better position his/her face within the predetermined frame. An arrow pointing to the left provides a simple visual indication that the near-end user needs to move to the left, etc.

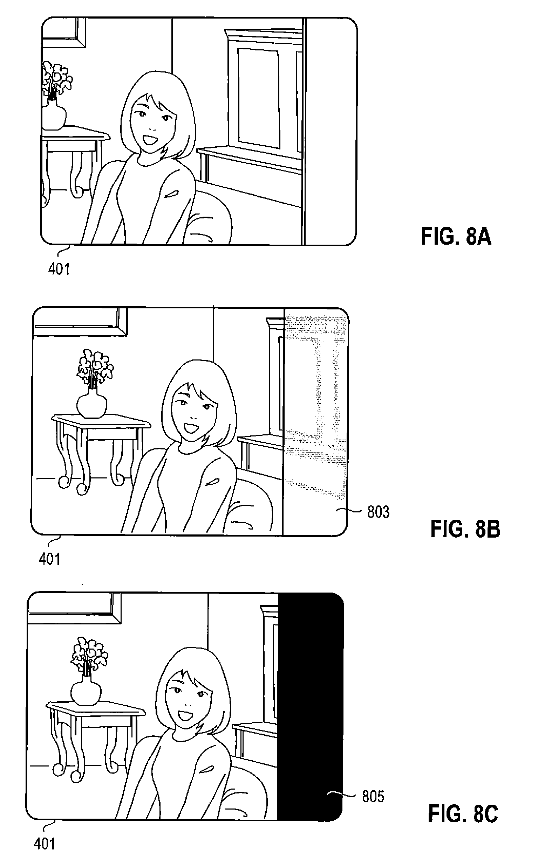

Another alternative indication is depicted in Fig. 8A. The image displaying the far-end user is adjustable as to its position within window 401. The image position is adjusted so that it moves according to how the near-end user's positions his/her face. As the near-end user's face indicia cross the boundary out of the predetermined area defining the central part of the captured image, the far end image displayed on the display of the near-end user changes. In one embodiment, the far-end image shifts position on the display. This effect mimics the experience of looking at another person through a real window frame, so the other person's face moves to the left if one's own face moves to the right. The display window is thus separated into two portions, that portion that contains the image of the far-end user, which moves according to the detected position of the near-end user's face, and that portion that is substantially devoid of far-end image. This devoid portion may be a blank portion of the display, a blackened portion of the display, another patterned or shaded area, or a defocused portion of the far-end image. The placement of this portion is indicative of the direction the near-end user is to move to better place his/her face within the image capture area. In this way, the near-end user would make sure to adjust his/her own face position to a place where it can be seen by the camera, since this is the only way to see the other person's face. By mimicking the real world, continuously moving the other person's face if one moves one's own face, a near-end user's readjustment of his/her own face position would be natural and non-distracting.

Alternatively, the image within the window 401 remains in a fixed location while an area of the image, area 803, becomes unfocused (Fig. 8B) or an area of the image, area 805, becomes blacked-out (Fig. 8C). As the near-end user moves his/her head, the displayed far-end useful image area increases or decreases in size; an increase in the useable far-end image indicating a proper head positioning for the near-end user.

Another embodiment displays the far-end user's image in a window on the display and a shadow or particle effect is used in the representation of the near-end user's face as an overlay over the far-end user's image. This superposition of images is suggestive of the near-end user looking through a window and seeing a dim reflection of himself/herself from the glass of the window.

Recent work in the use of three-dimensional representation using a webcam (see Harrison, C. and Hudson, S. E., "Pseudo-3D Video Conferencing with a Generic Webcam", Proceedings of the 10th IEEE International Symposium on Multimedia (Berkeley, California, USA, December 15 - 17, 2008). ISM '08, IEEE, Washington, D.C., pp. 236-241) suggests motion parallax between a front image plane and a rear image plane gives users a perception of a three-dimensional image. A single webcam and suitable software can separate the far-end user from the background at the far-end and the two image planes are processed to introduce motion parallax. In a more complicated arrangement, a second camera spaced a suitable distance from the first camera on the same face of a wireless device can provide stereoscopic images that are useful in developing a three-dimensional image for motion parallax and cues for head positioning for video conferencing and video chat applications. Position sensing may also be accomplished with the use of infrared illumination and subsequent infrared detection of the user's head position.

Face tracking is further able to resolve the overall orientation ambiguity presented when the wireless device is placed in a manner that does not afford a measurement of gravity to determine which way is "up". The face tracking program output of an indicium of the near-end user's face locates the face relative to upside down/rightside up orientation. Transmission of the near-end user's image is performed with the information gathered from the facial recognition program to provide proper orientation.

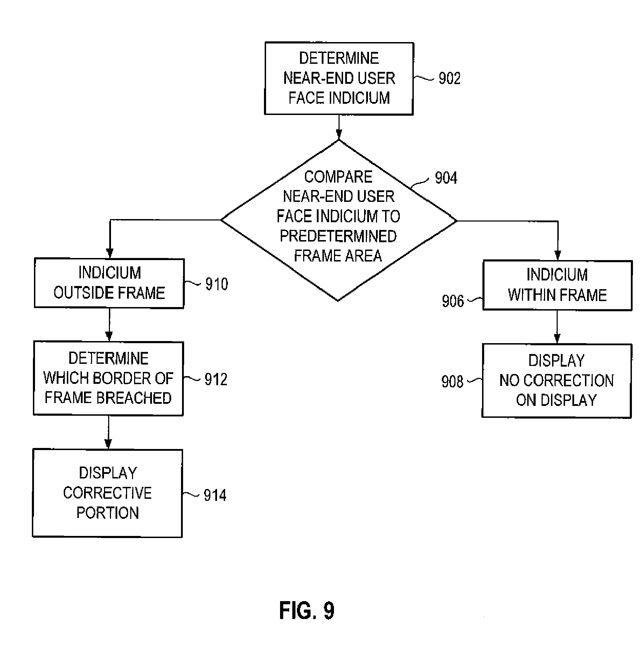

The process of providing a non-distracting indication of face positioning to the near-end user is shown in the flow diagram of Fig. 9. The face tracking program determines an indicium of the near-end user's face, at 902. This indicium is compared to the predetermined frame boundaries of the display window, at 904. A determination that the near-end user's face is in the frame, at 906, results in no correction required on the display, which, in an embodiment employing a positive indicator such as a color dot or indicator arrow on the display 134, means the dot or arrow indicates to the near-end user that no correction is required, at 908. A determination at 910, that the near-end user's face is not within the frame, that is, that the positional indicium of the near-end user's face has breached one or more of the borders of the frame is made at 910. A determination is made of which border is breached, at 912, and, in an embodiment employing a positive indicator such as a color dot or indicator arrow, a display of an indicator on the display 134 is made, at 914, to at least indicate an incorrect positioning of the near-end user's face with respect to the camera and the camera's image capture area. A corrective direction can also be provided. In an embodiment employing modification of the far-end image in a portion of the near-end display, that portion is modified and displayed, at 914, to indicate that corrective action is needed.

Aspects described above can be implemented as computer executable code modules that can be stored on computer readable media, read by one or more processors, and executed thereon. In addition, separate boxes or illustrated separation of functional elements of illustrated systems does not necessarily require physical separation of such functions, as communications between such elements can occur by way of messaging, function calls, shared memory space, and so on, without any such physical separation. More generally, a person of ordinary skill would be able to adapt these disclosures to implementations of any of a variety of communication devices. Similarly, a person of ordinary skill would be able to use these disclosures to produce implementations and embodiments on different physical platforms or form factors without deviating from the scope of the claims and their equivalents.

Thus, an apparatus and method useful for video chat applications has been disclosed as employing face tracking functionality to display an indication of the near-end user being properly positioned within an image capture area of the communication device without displaying the near-end user's image.

Presently preferred implementations of the disclosure and many improvements and advantages thereof have been described with a degree of particularity. The description is of preferred examples of implementing the disclosure, and the description of examples is not necessarily intended to limit the scope of the disclosure.

### According to further aspects, the following items are disclosed:

1. A near-end communication device for connecting to a far-end communication device for communication via a video connection, comprising:
   a camera positioned at the near-end communication device to capture visible information present in an image capture area; and
   a display having:
      a first display portion where video information from a camera of the far-end communication device is displayed, and
      a second display portion where an indicator is displayed, said indicator providing information related to visible information captured by said camera.
2. The near-end communication device of item 1 wherein said information related to visible information captured by said near-end communication device camera includes an image of a portion of the face of the near-end user within said image capture area.
3. The near-end communication device of items 1 and 2 wherein said indicator is an indicator of a first color when said image of a portion of the face of the near-end user is wholly located within said image capture area and is of a second color when said image of a portion of the face of the near-end user is not wholly located within said image capture area.
4. The near-end communication device of items 1 - 3 wherein said indicator is a directive symbol.
5. The near-end communication device of items 1 - 2 further comprising an indicium generator that derives a positional indicium of the near-end user's face from said image of a portion of the face of the near-end user within said image capture area.
6. The near-end communication device of item 5 further comprising a comparator that compares a location of said positional indicium to at least one boundary of a predetermined area within said image capture area.
7. The near-end communication device of item 6 wherein said comparator generates said indicator for display in said second display portion, said indicator having characteristics related to said compared location of said positional indicium to said at least one boundary.
8. The near-end communication device of item 7 wherein said indicator comprises one of defocused video information from the far-end user and deleted video information from said first display portion.
9. A method of providing image position information to a near-end communication device for video connection to a far-end communication device, comprising:
   capturing visible information present in an image capture area of a camera of the near-end communication device;
   displaying in a first portion of a display video information from a camera of the far-end communication device; and
   displaying an indicator in a second portion of said display, said indicator providing information related to visible information captured by said camera of the near-end communication device.
10. The method of item 9 wherein said information related to visible information captured by said near-end communication device camera includes an image of a portion of the face of the near-end user within said image capture area.
11. The method of item 10 wherein said displaying an indicator further comprises displaying an indicator of a first color when said image of the face of the near-end user is wholly located within said image capture area and displaying an indicator of a second color when said image of the face of the near-end user is not wholly located within said image capture area.
12. The method of items 9 - 11 wherein said displaying in a second portion further comprises displaying a directive symbol.
13. The method of items 9 - 10 further comprising deriving a positional indicium of the near-end user's face from said image of a portion of the face of the near-end user within said image capture area.
14. The method of item 13 further comprises comparing a location of said positional indicium to at least one boundary of a predetermined area within said image capture area.
15. The method of item 14 further comprising generating said indicator for display in said second display portion, said indicator having characteristics related to said compared location of said positional indicium to said at least one boundary.

The scope of the disclosure is defined by the following claims.

## Claims

1. A near-end communication device for connecting to a far-end communication device for communication via a video connection, comprising:
a camera positioned at the near-end communication device to capture visible information present in an image capture area; and
a display having:
a first display portion where video information from a camera of the far-end communication device is displayed, and
a second display portion where an indicator is displayed, said indicator providing information related to visible information captured by said camera.

2. The near-end communication device of claim 1 wherein said information related to visible information captured by said near-end communication device camera includes an image of a portion of the face of the near-end user within said image capture area.

3. The near-end communication device of claims 1 or 2 wherein said indicator is an indicator of a first color when said image of a portion of the face of the near-end user is wholly located within said image capture area and is of a second color when said image of a portion of the face of the near-end user is not wholly located within said image capture area.

4. The near-end communication device of any one of claims 1 - 3 wherein said indicator is a directive symbol.

5. The near-end communication device of claims 1- 2 further comprising an indicium generator that derives a positional indicium of the near-end user's face from said image of a portion of the face of the near-end user within said image capture area.

6. The near-end communication device of claim 5 further comprising a comparator that compares a location of said positional indicium to at least one boundary of a predetermined area within said image capture area.

7. The near-end communication device of claim 6 wherein said comparator generates said indicator for display in said second display portion, said indicator having characteristics related to said compared location of said positional indicium to said at least one boundary.

8. The near-end communication device of claim 7 wherein said indicator comprises one of defocused video information from the far-end user and deleted video information from said first display portion.

9. A method of providing image position information to a near-end communication device for video connection to a far-end communication device, comprising:
capturing visible information present in an image capture area of a camera of the near-end communication device;
displaying in a first portion of a display video information from a camera of the far-end communication device; and
displaying an indicator in a second portion of said display, said indicator providing information related to visible information captured by said camera of the near-end communication device.

10. The method of claim 9 wherein said information related to visible information captured by said near-end communication device camera includes an image of a portion of the face of the near-end user within said image capture area.

11. The method of claim 10 wherein said displaying an indicator further comprises displaying an indicator of a first color when said image of the face of the near-end user is wholly located within said image capture area and displaying an indicator of a second color when said image of the face of the near-end user is not wholly located within said image capture area.

12. The method of any one of claims 9 - 11 wherein said displaying in a second portion further comprises displaying a directive symbol.

13. The method of any one of claims 9 - 10 further comprising deriving a positional indicium of the near-end user's face from said image of a portion of the face of the near-end user within said image capture area.

14. The method of claim 13 further comprises comparing a location of said positional indicium to at least one boundary of a predetermined area within said image capture area.

15. The method of claim 14 further comprising generating said indicator for display in said second display portion, said indicator having characteristics related to said compared location of said positional indicium to said at least one boundary.
